# EUROPEAN PATENT APPLICATION

(11) **EP 4 443 309 A1**
(43) Date of publication of application: **09.10.2024**
(21) Application number: 24168987.6
(22) Date of filing: 08.04.2024
(51) Int. Cl.: G06F 16/248, G06F 16/35, G06N 3/08, G06N 20/00

(54) **COLLECTING AND PRESENTING HIERARCHICAL DATA**

(30) Priority: 07.04.2023 US 202363495051 P; 05.04.2024 US 202418628553
(71) Applicant: TransforML Platforms Inc., Ottawa ON K2P 0X5 (CA)
(72) Inventor: ZAIDI, Syed Ahmad Raza, Ottawa, ON K2P 0X5 (CA); AHMED, Syed Ali, Ottawa, ON K2P 0X5 (CA); TANG, Xiaohu, Ottawa, ON K2P 0X5 (CA)
(74) Representative: D Young & Co LLP

(57) **Abstract**

A method collects and presents hierarchical data. The method includes receiving objective user inputs applied to a set of objective objects of a set of objects, receiving topic user inputs applied to a set of topic objects of the set of objects, and receiving settlement user inputs applied to a set of settlement objects of the set of objects. The method further includes applying a guidance categorization model to a guidance object of the set of topic objects to a generate a guidance label for the guidance object, applying a blocker categorization model to a blocker object of the set of topic objects to generate a blocker label for the blocker object, and applying a diagram metrics model to the set of objects to generate diagram metrics data. The method further includes presenting a topic diagram using the guidance label, the blocker label, and the diagram metrics data.

## Description

### CROSS REFERENCE TO RELATED APPLICATION

This application claims the benefit of U.S. Provisional Application No. 63/495,051, filed April 7, 2023, which is incorporated by reference herein.

### BACKGROUND

Computer systems capture and display information. For example, graphical user interfaces (GUIs) may be used to collect and then store information from user inputs. The user inputs may include text written by the user that is stored in a repository or database. In response to the text from user, information may be generated and displayed that is relevant to the text generated by the user. A challenge is generating useful information with data in a structured hierarchy and presenting the information within the limitations provided by the graphical user interface.

### SUMMARY

Particular aspects are set out in the appended independent claims. Various optional embodiments are set out in the dependent claims.

In general, in one or more aspects, the disclosure relates to a method that collects and presents hierarchical data. The method includes receiving objective user inputs applied to a set of objective objects of a set of objects, receiving topic user inputs applied to a set of topic objects of the set of objects, and receiving settlement user inputs applied to a set of settlement objects of the set of objects. The method further includes applying a guidance categorization model to a guidance object of the set of topic objects to a generate a guidance label for the guidance object, applying a blocker categorization model to a blocker object of the set of topic objects to generate a blocker label for the blocker object, and applying a diagram metrics model to the set of objects to generate diagram metrics data. The method further includes presenting a topic diagram using the guidance label, the blocker label, and the diagram metrics data.

In general, in one or more aspects, the disclosure relates to a system with at least one processor and an application that executes on the at least one processor to collect and present hierarchical data. Executing the application performs receiving objective user inputs applied to a set of objective objects of a set of objects, receiving topic user inputs applied to a set of topic objects of the set of objects, and receiving settlement user inputs applied to a set of settlement objects of the set of objects. Executing the application further performs applying a guidance categorization model to a guidance object of the set of topic objects to a generate a guidance label for the guidance object, applying a blocker categorization model to a blocker object of the set of topic objects to generate a blocker label for the blocker object, and applying a diagram metrics model to the set of objects to generate diagram metrics data. Executing the application further performs presenting a topic diagram using the guidance label, the blocker label, and the diagram metrics data.

In general, in one or more aspects, the disclosure relates to a computer readable medium with instructions executable by at least one processor to collect and present hierarchical data. The instructions perform receiving objective user inputs applied to a set of objective objects of a set of objects, receiving topic user inputs applied to a set of topic objects of the set of objects, and receiving settlement user inputs applied to a set of settlement objects of the set of objects. The instructions further perform applying a guidance categorization model to a guidance object of the set of topic objects to a generate a guidance label for the guidance object, applying a blocker categorization model to a blocker object of the set of topic objects to generate a blocker label for the blocker object, and applying a diagram metrics model to the set of objects to generate diagram metrics data. The instructions further perform presenting a topic diagram using the guidance label, the blocker label, and the diagram metrics data.

Other aspects of the one or more embodiments may be apparent from the following description and the appended claims.

### BRIEF DESCRIPTION OF DRAWINGS

Figure 1, Figure 2A, Figure 2B, and Figure 3 show diagrams in accordance with one or more embodiments of the disclosure.
Figure 4 shows a method in accordance with one or more embodiments of the disclosure.
Figure 5, Figure 6, Figure 7, Figure 8, Figure 9, Figure 10, Figure 11, Figure 12, Figure 13, and Figure 14 show examples in accordance with one or more embodiments of the disclosure.
Figure 15A and Figure 15B show computing systems in accordance with one or more embodiments.

Similar elements in the various figures are denoted by similar names and reference numerals. The features and elements described in one figure may extend to similarly named features and elements in different figures.

### DETAILED DESCRIPTION

Embodiments of the disclosure collect and present hierarchical data. The data is collected from user inputs and stored as hierarchical data and a set of objects. The data from the objects include multiple hierarchies with a hierarchy between the objects and a hierarchy between the users that are associated with the objects. The objects and information generated from the data collected from the user input is processed to generate diagrams, indexes, and maps. The processing is performed with multiple models, including machine learning models. The diagrams, indexes, and maps condense and display information relevant to users given the limited amount of space for displaying the information gathered and generated by the system.

As an example, the information collected by the system may include descriptions stored in user objects, objective objects, topic objects, and settlement objects. The descriptions may include text provided by the user. The text may be converted to vectors that are processed with machine learning models to identify labels that categorize the objects. The labels and additional metrics may be displayed in diagrams that provide information to the user about the processing of the objects and corresponding information.

As another example, the information collected by the system may be processed to generate values for execution index data. The execution index data provides indexes that correspond to users and the handling of data related to the objects recorded by the system.

As another example, the information collected by the system may be processed to generate objective maps. The objective maps may display the hierarchies between the objective objects and between the users associated with the objective objects.

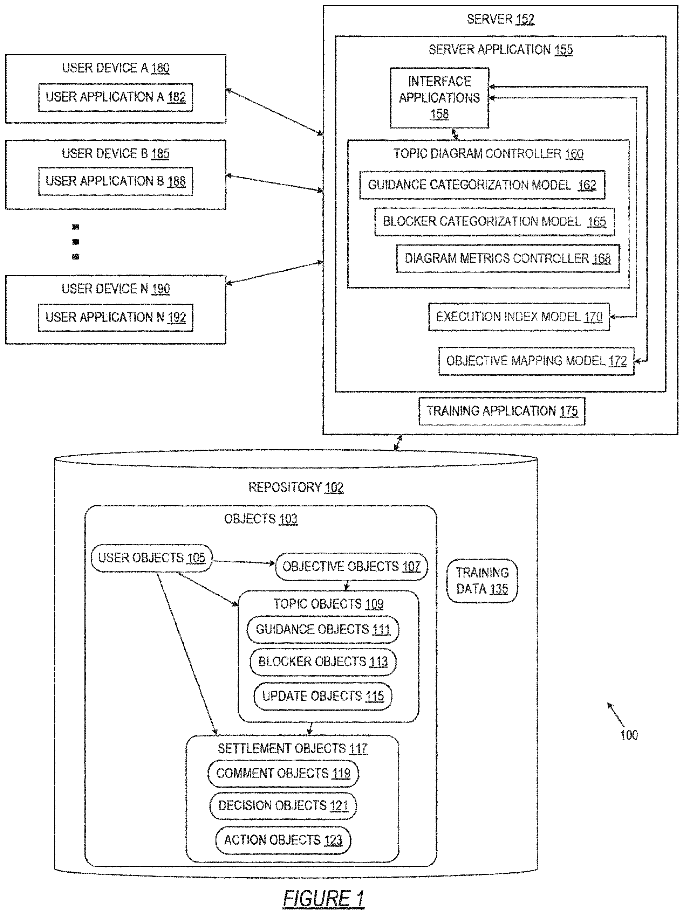

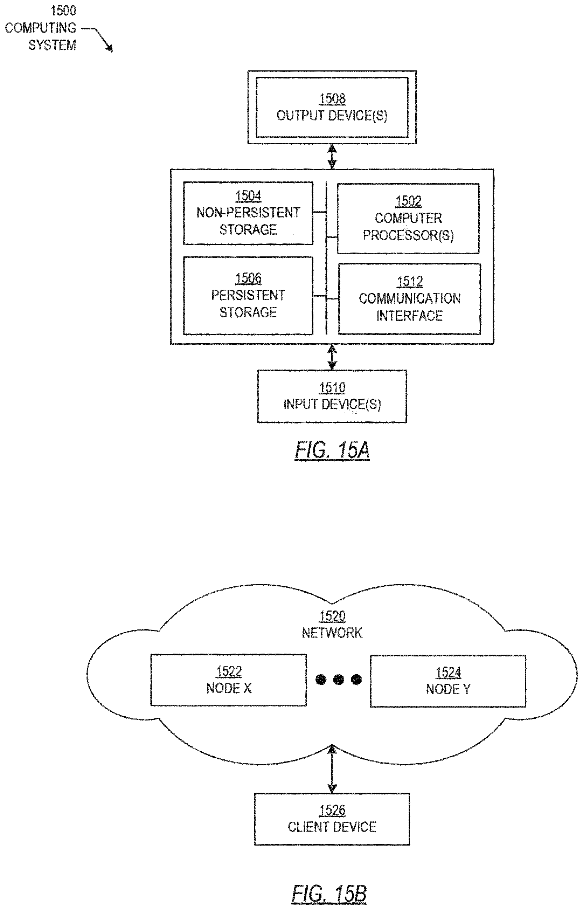

Turning to Figure 1, the system (100) is a computing system shown in accordance with one or more embodiments. The system (100) and corresponding components may utilize the computing systems described in Figure 15A and Figure 15B to implement the collection and presentation of hierarchical data. The system (100) includes the repository (102), the server (152), and the user devices A (180) and B (185) through N (190).

The repository (102) is a type of storage unit and/or device (e.g., a file system, database, data structure, or any other storage mechanism) for storing the data. The repository (102) may include multiple different, potentially heterogenous, storage units and/or devices. The repository (102) stores data utilized by other components of the system (100). The data stored by the repository (102) includes the objects (103) and the training data (135).

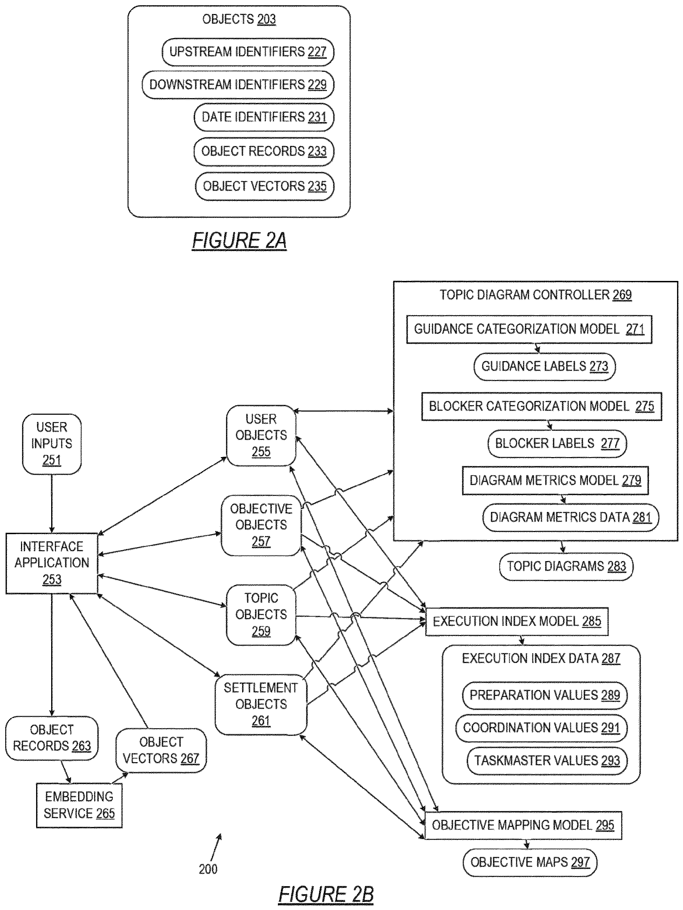

The objects (103) are a set of computer programming objects that store data extracted from user inputs. The data extracted from the user inputs may include textual descriptions stored as objective records within the objects (103). Additional description of the data and information stored in the objects (103) is provided with Figure 2A. The objects (103) include the user objects (105), the objective objects (107), the topic objects (109), and the settlement objects (117). The objects (103) may be structured with multiple hierarchies. One hierarchy is the hierarchy between different types of objects. For example, each of the objective objects (107) may be upstream from (or a parent of) multiple topic objects (109). Each of the topic objects (109) may be upstream from (or a parent of) multiple settlement objects (117).

The user objects (105) identify the users of the system (100). Information stored in the object record of a user object may include a name for the user, contact information (including an email address), *etc.* Each of the user objects (105) may be associated with one or more of the objective objects (107), the topic objects (109), and the settlement objects (117). Association of the user objects (105) to one or more of the objects (103) (including to one or more of the objective objects (107), the topic objects (109), and the settlement objects (117)) may provide an identification of the users that are responsible for the corresponding objects (103).

The objective objects (107) store information describing objectives that are associated with the users of the system (100). The information describing the objectives may be stored as text after being extracted from user inputs received by the system (100). The information is stored in objective records of the objective objects (107). The objective objects (107) may further maintain a hierarchy between the objective objects (107). For example, one of the objective objects (107) may be a parent that is upstream from other objective objects (117). The hierarchy between the objective objects (107) may correspond to a hierarchy between users of the system. For example, a user Jack may be associated with a first objective object that is the parent to a second objective object that is associated with the user Janice, who is a subordinate of Jack. Additionally, each of the objective objects (107) may be associated with one or more of the topic objects (109).

The topic objects (109) store information describing topics that relate to the objectives stored with the objective objects (107). In an embodiment, one of the topic objects (109) may be associated with one of the objective objects (107) and one of the objective objects (107) may be associated with multiple topic objects (109). The information describing the topics of the topic objects (109) may be stored as text after the text is extracted from user inputs received by the system (100). The topic objects (109) may include several types, including the guidance objects (111), the blocker objects (113), and the update objects (115).

The guidance objects (111) are one type of the topic objects (109). In an embodiment, the text stored in the object record of one of the guidance objects (111) may include requests for guidance with regards to the objectives stored in the object records for the objective objects (107) to which the guidance objects (111) are associated.

The blocker objects (113) are one type of the topic objects (109). In an embodiment, the text stored in the object record of one of the blocker objects (113) may include a description of issues preventing progress with the objectives stored in the object records for the objective objects (107) to which the blocker objects (113) are associated.

The update objects (115) are one type of the topic objects (109). In an embodiment, the text stored in the object record of one of the update objects (115) may include descriptions of updates related to the objectives stored in the object records for the objective objects (107) to which the update objects (115) are associated.

The settlement objects (117) store information related to the topics of the topic objects (109). In an embodiment, one of the settlement objects (117) may be associated with one of the topic objects (109). Information stored by the settlement objects (117) may be stored as text after the text is extracted from user inputs received by the system (100). The settlement objects (117) may include several types, including the comment objects (119), the decision objects (121), and the action objects (103).

The comment objects (119) are one type of the settlement objects (117). In an embodiment, the text stored in the object record of one of the comment objects (119) provides additional information about one of the topics of the topic objects (109).

The decision objects (121) are one type of the settlement objects (117). In an embodiment, the text stored in the object record of one of the decision objects (121) is a record of a decision made with regard to one of the topics of the topic objects (109).

The action objects (103) are one type of the settlement objects (117). In an embodiment, the text stored in the object record of one of the action objects (103) is a record of an action related to one of the topics of the topic objects (109).

The training data (135) is the data used to train the machine learning models of the system (100). The training data (135) may include training inputs, intermediate values, training outputs, expected outputs, updates for the parameters of the models, *etc.,* which may be used or generated during the training of the machine learning models. The inputs may include messages received from the users of the system (100), text extracted from the messages, vectors generated from the text, *etc.*

Continuing with Figure 1, the system (100) also may include the server (152). The server (152) is one or more computing systems, possibly in a distributed computing environment. An example of the server (152) may be the computing system (1500) shown in Figure 15A.

The server (152) may host and/or execute one or more processes, programs, applications, *etc.* For example, the server (152) may execute one or multiple instantiations of the server application (155) using different computing systems and servers. The server (152) may interact with the user devices A (180) and B (185) through N (190) to process information. The server (152) executes the server application (155) and the training application (175).

The server application (155) is a collection of programs operating on the server (152). The server application (155) interfaces with the user applications A (182) and B (188) through N (192) to process messages with inputs from the users, update the data in the repository (102), and present information displayed within the limitations of the user devices A (180) and B (185) through N (190). The server application (155) includes the interface applications (158), the topic diagram controller (160), the execution index model (170), and the objective mapping model (172).

The interface applications (158) are programs running on the server (152) that provide the interfaces between the user applications A (182) and B (188) through N (192) and the models and controllers of the server application (155). The interface applications (158) process data from the user devices A (180) and B (185) through N (190) using the topic diagram controller (160), the execution index model (170), and the objective mapping model (172) and presents for display on the user devices A (180) and B (185) through N (190).

The topic diagram controller (160) is a set of programs that may execute as part of the server application (155). The topic diagram controller (160) uses the guidance categorization model (162), the blocker categorization model (165), and the diagram metrics controller (168) to process information received from the users of the system (100).

The guidance categorization model (162) is a machine learning model. The guidance categorization model (162) may be applied to the object vectors of the guidance objects (111) to generate labels that classify the guidance objects (111).

The blocker categorization model (165) is a machine learning model. The blocker categorization model (165) may be applied to the object vectors of the blocker objects (113) to generate labels that classify the blocker objects (113).

In an embodiment, the guidance categorization model (162) and the blocker categorization model (165) may use similar algorithms. In an embodiment, the guidance categorization model (162) and the blocker categorization model (165) may use gradient boosting to combine multiple decision trees to process the object vectors and generate labels.

The diagram metric controller (168) is a set of programs that generate metrics that may be presented with topic diagrams displayed on the user devices A (180) and B (185) through N (190). The metrics may quantify relationships between the users of the system (100) and the creation or completion of the objects (103).

The execution index model (170) is a set of programs that generate values of indexes that may be presented to the user devices A (180) and B (185) through N (190). The values generated with the execution index model (170) may quantify performance related to the users of the system (100).

The objective mapping model (172) is a set of programs that may present maps of the objective objects (107). The maps may be presented to the user devices A (180) and B (185) through N (190) and display the hierarchical relationships of and between the objective objects (107) and the user objects (105).

Continuing with Figure 1, the user devices A (180) and B (185) through N (190) may interact with the server (152). The user devices A (180) and B (185) through N (190) may be computing systems in accordance with Figure 15A and Figure 15B. The user devices A (180) and B (185) through N (190) may include and execute the user applications A (182) and B (188) through N (192).

The user applications A (182) and B (188) through N (192) are programs that operate on the user devices A (180) and B (185) through N (190) to provide user interaction by collecting user inputs and displaying outputs in response to the user inputs. The user applications A (182) and B (188) through N (192) may include user interfaces with user interface elements to receive inputs and display outputs to users of the system (100).

In an embodiment, the user device A (180) is operated by a user to update the information stored in the objects (103) and view information generated with the topic diagram controller (160), the execution index model (170), and the objective mapping model (172). For example, in response to a user providing the description text for one of the objective objects (107), the system may use the object mapping model (172) to update a view of an objective map displayed on the user device A (180). Additional objects and diagrams may be updated and displayed using the user device A (180).

In an embodiment, the user device N (190) may be operated by a developer of the system (100). The operator may train the machine learning models (e.g., the guidance categorization model (162) and the blocker categorization model (165)) using the training data (135). The operator may then deploy the trained machine learning models to the server (152) for use by the server application (155).

Although described within the context of a client server environment with servers and user devices, aspects of the disclosure may be practiced with a single computing system and application. For example, a monolithic application may operate on a computing system to perform the same functions as one or more of the applications executed by the server (152) and the user devices A (180) and B (185) through N (190).

Turning to Figure 2A, the objects (203) may each include several types and values of data. Each of the objects (203) may be one of the different types of the objects (103) from Figure 1. For example, one of the objects (203) may be one of a user object, an objective object, a topic object, a settlement object, *etc.* Each of the objects (203) may include one or more of the upstream identifiers (227), the downstream identifiers (229), the date identifiers (231), the object records (233), the object vectors (235), *etc.*

The upstream identifiers (227) are identifiers of an object that identify another object that is upstream from an object (*e.g.,* a parent object). For example, an upstream identifier of a topic object may identify an objective object to which the topic object belongs or is associated with. Objective objects may include an upstream identifier that identifies another objective object. Upstream identifiers of the settlement objects may identify topic objects to which the settlement objects are associated. In an embodiment, each of the objective objects, topic objects, and settlement objects may include and upstream identifier that identifies a user object to identify a user that is responsible for the object.

The downstream identifiers (229) are identifiers of an object that identify another object that is downstream from the object (*e.g.,* a child object). For example, a downstream identifier of a topic object may identify a settlement object that belongs or is associated with to the topic object. Downstream identifiers of objective objects may identify topic objects that belong or are associated with the objective objects. Downstream identifiers of the user objects may identify objects (including objective objects, topic objects, and settlement objects) that are associated with the user objects.

The date identifiers (231) identify dates for the objects (203). The dates identified may include creation dates of the objects (203), modification dates of the objects (203), completion dates of the objects (203), *etc.* The date identifiers may include information that identifies years, months, days, hours, minutes, seconds, milliseconds, *etc.,* for the dates related to the objects (203).

The object records (233) are the records of the objects (203) that store information. In an embodiment, the records stored by the objects (203) include text that is extracted from messages passed between the components of the system (*e.g.,* the components of the system (100) of Figure 1). The text may include descriptions provided by the users of the system (100) and written in natural language.

The object vectors (235) are vectors generated for the objects (203). In an embodiment, one of the object vectors (235) is generated for one of the object records (233). In an embodiment, an object vector represents the text of an object record in a semantic space so that object vectors with similar values represent text from object records with similar natural language meanings. In an embodiment, the number of dimensions or elements of an object vector corresponding to the semantic space may be in the range of 500 to 10,000 dimensions. For example, an object vector may have 1536 dimensions, 3072 dimensions, *etc.* Each of the object vectors (235) for the objects (203) may have the same number of dimensions.

Turning to figure 2B, the data flow (250) shows a flow of data through a system for collecting and presenting hierarchical data. The data flow (250) may be executed with the components described in Figure 1.

The user inputs (251) are inputs generated by users and passed in messages on the system. The user inputs (251) include text that may be used to update the objects maintained by the system, including the user objects (255), the objective objects (257), the topic objects (259), and the settlement objects (261). The user inputs (251) may include objective user inputs, topic user inputs, settlement user inputs, *etc.* Objective user inputs may include text for the objective objects (257). Topic user inputs may include text for the topic objects (259). Settlement user inputs may include text for the settlement objects (261). As an example, the user inputs (251) may include a description of an objective that is stored in the object record of one of the objective objects (257).

The interface application (253) is a program that processes the user inputs (251) to manage the user objects (255), the objective objects (257), the topic objects (259), and the settlement objects (261) and to generate and present the topic diagrams (283), the execution index data (287), and the objective maps (297). The interface application (253) receives the user inputs (251), extracts text from the user inputs (251), and stores the text in the object records of the user objects (255), the objective objects (257), the topic objects (259), and the settlement objects (261). The interface application (253) may also engage the embedding service (265) to process the object records (263) and generate the object vectors (267).

The object records (263) are the object records of the user objects (255), the objective objects (257), the topic objects (259), and the settlement objects (261). The object records (263) may store text descriptions of the user objects (255), the objective objects (257), the topic objects (259), and the settlement objects (261). The object records (263) are passed to the embedding service (265) to generate the object vectors (267).

The embedding service (265) is a collection of programs that process the object records (263) to generate the object vectors (267). The embedding service (265) may employ one or more machine learning models to generate the object vectors (267) from the object records (263).

The object vectors (267) are vectors generated from the object records (263) that map the text from the object records (263) to a semantic space. The object vectors (267) may be passed back to the interface application (253) that stores the object vectors (267) to the user objects (255), the objective objects (257), the topic objects (259), and the settlement objects (261).

The user objects (255), the objective objects (257), the topic objects (259), and the settlement objects (261) are data structures that include information about users, objectives, topics, settlements, *etc.* The user objects (255), the objective objects (257), the topic objects (259), and the settlement objects (261) may be used to store the object records (263) and the object vectors (267).

The topic diagram controller (269) is a collection of programs that generate the topic diagrams (283) from the user objects (255), the topic objects (259), and the settlement objects (261). The topic diagram controller (269) utilizes the guidance categorization model (271), the blocker categorization model (275), and the diagram metrics model (279).

The guidance categorization model (271) processes the object vectors (267) that correspond to guidance objects, which are a subset of the topic objects (259). The guidance categorization model (271) is applied to object vectors to generate the guidance labels (273). The guidance labels (273) identify categories for the guidance objects. In an embodiment, the guidance labels (273) may include labels for "approval", "direction", and "prioritization".

The blocker categorization model (275) processes object vectors of blocker objects, which are a subset of the topic objects (259). The blocker categorization model (275) is applied to object vectors to generate the blocker labels (277). The blocker labels (277) identify categories for the blocker objects. In an embodiment, the blocker labels (277) may include labels for "process", "product", and "resource limitations".

The diagram metrics model (279) processes information about the user objects (255), the objective objects (257), the topic objects (259), and the settlement objects (261) to generate the diagrammatic data (281). The metrics generated by applying the diagram metrics model (279) to the information about the user objects (255), the objective objects (257), the topic objects (259), and the settlement objects (261) may include average times and median times related to the creation, modification, completion, *etc.,* of objects.

The topic diagrams (283) are diagrams generated by the topic diagram controller (269) with the guidance labels (273), the blocker labels (277), and the diagram metrics data (281). In an embodiment, the topic diagrams (283) may be visual diagrams stored as images, which may be passed back to the interface application (253) for presentation and display on the user devices that provided the user inputs (251).

The execution index model (285) is a collection of programs that generate the execution index data (287) from the user objects (255), the topic objects (259), and the settlement objects (261). The execution index model (285) may execute in real time to continuously update the execution index data (287) in response to changes to the user objects (255), the topic objects (259), and the settlement objects (261).

The execution index data (287) is data that includes the preparation values (289), coordination values (291), and the taskmaster values (293). The values within the execution index data (287) may be generated for each user of the system for a period of time. The execution index data (287) may also include thresholds for each of the different types of values. In an embodiment, if a value for a user falls below one of the corresponding thresholds, the user may be labeled as "needing improvement". Otherwise, the user may be labeled as "meeting expectations". In an embodiment, color coding may be used. For example, when below the threshold, a red shade of color may be used with the background color, font color, highlight color, *etc.* When above the threshold, a green shade of color may be used with the background color, font color, highlight color, *etc.*

The preparation values (289) may quantify the number of topic objects (259) created during a period of time. For example, the preparation values (289) may identify the number of topic objects (259) created per week during a period of time (*e.g.,* the most recent four weeks) for a user of the system. In an embodiment, a preparation threshold for the preparation values may be at least one topic object created per week over a period of the last four weeks.

The coordination values (291) may quantify the number of settlement objects (261) (*e.g.,* action objects or decision objects) created during a period of time. For example, the coordination values (291) may identify the number of settlement objects (261) created for each topic object created during a period of time (*e.g.,* the last four weeks). In an embodiment, a coordination threshold for the coordination values may be at least one settlement object created for each topic object over a period of the last four weeks.

The taskmaster values (293) may quantify the number of settlement objects (261) (*e.g.,* action objects or decision objects) recorded as closed during a period of time. For example, the taskmaster values (293) may identify the number of settlement objects (261) recorded as closed during, *e.g.,* the last four weeks. In an embodiment, a taskmaster threshold for the taskmaster values may be at least 40 percent of action objects are recorded as complete over a period of the last four weeks.

The objective mapping model (295) is a collection of programs that generate the objective maps (297) from the user objects (255), the objective objects (257), the topic objects (259), and the settlement objects (261). The objective mapping model (295) may update the objective maps (297) responsive to changes to the user objects (255), the objective objects (257), the topic objects (259), and the settlement objects (261).

The objective maps (297) show the hierarchical relationships between the objective objects (257) and the user objects (255). The objective maps (297) may be generated and displayed graphically on demand in response to the user inputs (251). Multiple objective objects (257) may be displayed in one of the objective maps (297). One of the objective objects (257) may be displayed as an objective card in the objective map. An objective card is an interactive user interface element that displays information related to one of the objective objects (257).

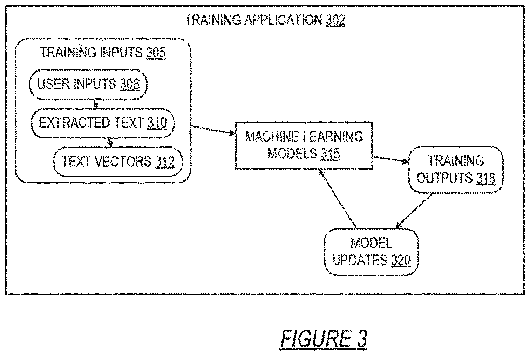

Turning to Figure 3, the training application (302) trains the machine learning models (315). The training application (302) may operate as part of the system (100) of Figure 1.

The training inputs (305) are the inputs used to train the machine learning models (315). The training inputs include one or more of the user inputs (308), the extracted text (310), and the text vectors (312). As a part of the training process, the training application (302) may process the user inputs (308) to extract the extracted text (310) and process the extracted text (310) to generate the text vectors (312). One or more of the user inputs (308), the extracted text (310), the text vectors (312) may be stored in a repository for training the machine learning models (315).

The user inputs (308) are inputs from users of the system. The user inputs are received as messages that include text written by the users. The extracted text (310) is text extracted from the user inputs (308). The extracted text (310) includes descriptions of the objects maintained by the system. The text vectors (312) are vector representations of the extracted text (310) in a semantic space. The text vectors (312) may be generated by an embedding service that generates embedding vectors used as the text vectors (312).

The machine learning models (315) are trained by the training application (302). In an embodiment, the machine learning models (315) may include categorization models for categorizing the object records of guidance objects and blocker objects. The machine learning models (315) are applied to the training inputs (305) to generate the training outputs (318).

The training outputs (318) are the outputs from the machine learning models (315). As an example, the training outputs (318) may include labels that identify the categories to which objects used by the system may be classified.

The model updates (320) are updates to the machine learning models (315) generated from the training outputs (318). In an embodiment, the training outputs (318) may be compared to expected outputs to identify differences between the training outputs (318) and the expected outputs. The differences may be used to generate the model updates (320) and fed back into the machine learning models (315). The functions used to generate the model updates (320) and apply the model updates (320) to the machine learning models (315) may use back propagation, gradient descent, *etc.*

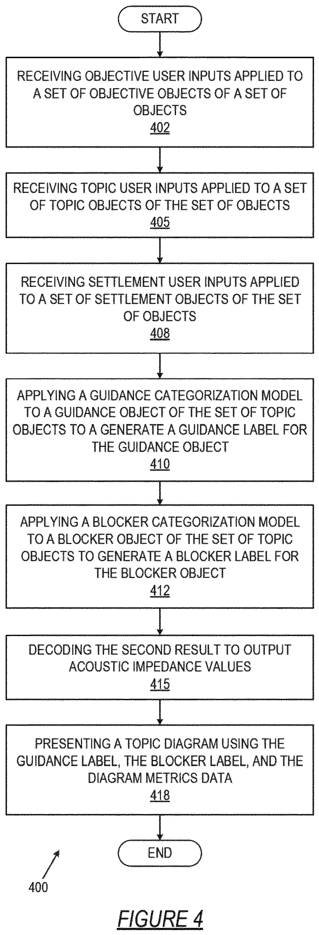

Figure 4 shows the process (400) for collecting and presenting hierarchical data. In an embodiment, a system may include at least one processor and an application that, when executing on the at least one computer processor, performs the processes (400). In one embodiment, a computer readable medium may include instructions that, when executed by one or more computer processors, perform the process (400).

Turning to Figure 4, the process (400) collects and presents hierarchical data. The process (400) may include multiple steps (*e.g.,* the steps 402 through 418) that may execute on the components described in the other figures, including those of Figure 1.

Step 402 includes receiving objective user inputs that are applied to a set of objective objects of a set of objects. The objective user inputs may be received from user devices by a server that extracts text from the objective user inputs and stores the text to object records of the objective objects.

Step 405 includes receiving topic user inputs that are applied to a set of topic objects of the set of objects. The topic user inputs may be received from user devices by a server that extracts text from the topic user inputs and stores the text to object records of the topic objects.

Step 408 includes receiving settlement user inputs that are applied to a set of settlement objects of the set of objects. The settlement user inputs may be received from user devices by a server that extracts text from the settlement user inputs and stores the text to object records of the settlement objects.

Step 410 includes applying a guidance categorization model to a guidance object of the set of topic objects to generate a guidance label for the guidance object. In an embodiment, text for the guidance object may be extracted from the object record for the guidance object. The extracted text may be converted to a vector in a semantic word space using an embedding service. The guidance categorization model may be applied to the vector to generate the guidance label. The guidance label may be stored with the guidance object.

Step 412 includes applying a blocker categorization model to a blocker object of the set of topic objects to generate a blocker label for the blocker object. In an embodiment, text for the blocker object may be extracted from the object record for the blocker object. The extracted text may be converted to a vector in a semantic word space using an embedding service. The blocker categorization model may be applied to the vector to generate the blocker label. The blocker label may be stored with the blocker object.

Step 415 includes applying a diagram metrics model to the set of objects to generate diagram metrics data. The diagram metrics model may extract information identifying the times and dates for the creation, modification, completion, *etc.,* of the set of objects maintained by the system. Statistics may then be generated from the information, including the average time to create a settlement object (*e.g.,* an action object) after the creation of a topic object (*e.g.,* a blocker object), the median time from the creation of a settlement object to the completion of the settlement object being recorded.

Step 418 includes presenting a topic diagram using the guidance label, the blocker label, and the diagram metrics data. The topic diagram may be generated using information from the set of objects. For example, the system may extract the topic objects that are blocker objects and guidance objects and use the categorization models to identify blocker and guidance labels for the blocker and guidance objects. The labels along with the metrics may be gathered into a message that is transmitted to a user device. The user device may then display the topic diagram graphically with one or more of the guidance label, the blocker label, and the diagram metrics data.

In an embodiment, the process (400) may further include extracting a set of text from a set of user inputs that include one or more of the objective user inputs, the topic user inputs, and the settlement user inputs. The text may be wrapped in a message received from a user device. The extraction may remove portions of the message that do not relate to the text, such as a header of the message.

After extracting the set of text, an embedding model may be applied to the set of text to generate a set of vectors for the set of objects. In an embodiment, one vector may be generated for each of the set of objects to map the set of objects to a semantic space.

In an embodiment, the process (400) may further include training the guidance categorization model to generate the guidance label from a vector representing the guidance object. The generation may be performed by applying the guidance categorization model to a set of training inputs to generate a set of training outputs used to generate model updates that are applied to the guidance categorization model. The training outputs from the guidance categorization model may be compared to expected outputs to generate the model updates and the model updates may be applied to the guidance categorization model using back propagation, gradient descent, *etc.*

In an embodiment, the process (400) may further include training the blocker categorization model to generate the blocker label from a vector representing the blocker object. The generation may be performed by applying the blocker categorization model to a set of training inputs to generate a set of training outputs used to generate model updates that are applied to the blocker categorization model. The training outputs from the blocker categorization model may be compared to expected outputs to generate the model updates and the model updates may be applied to the blocker categorization model using back propagation, gradient descent, *etc.*

In an embodiment, the process (400) may further include applying an execution index model to the set of objects to generate execution index data. After applying the execution index model, the execution index data may be presented in response to an execution user input. The execution user input may be a request received from a user in which the request is transmitted responsive to the user selecting a user interface element (*e.g.,* a button, a link, *etc.*)*.*

In an embodiment, the process (400) may further include applying an objective mapping model to the set of objects to generate an objective map. The objective mapping model may extract information from the objective objects (*e.g.,* the upstream and downstream identifiers) that are used to generate a graphical depiction of the hierarchical relationships between the objective objects. After applying the objective mapping model, an objective map with the set of objective objects may be presented in response to a mapping user input. The mapping user input may be a request received from a user in which the request is transmitted responsive to the user selecting a user interface element (*e.g.,* a button, a link, *etc.*)*.*

In an embodiment, the process (400) may further include additional steps for presenting an objective map. The additional steps may include presenting the objective map with a first objective card representing a first objective object of the set of objective objects and linked to a first user object. The additional steps may also include presenting the objective map with a second objective card representing a second objective object of the set of objective objects and linked to a second user object. The additional steps may further include presenting a connection between the first objective card and the second objective card. The connection represents an objective hierarchy between the first objective object and the second objective object and represents a user hierarchy between the first user object and the second user object. Presenting the first objective card, the second objective card, and the connection may include transmitting the first objective card, the second objective card, and the connection to a user device, which then displays the first objective card, the second objective card, and the connection.

In an embodiment, the process (400) may further include presenting an objective map with a first objective card comprising an activity icon coded to identify an activity level. The activity icon may be coded using colors, symbols, *etc.* For example, the activity icon may include a green bell to indicate an activity level that is above a threshold level and include a red hourglass symbol with a slash to indicate the activity level is below the threshold level.

In an embodiment, the process (400) may further include presenting an objective table with information from the set of objective objects and the set of topic objects. The objective table may display the information in rows and columns. The columns may include information for objectives (objective objects), topics (topic objects), meeting actions (settlement objects), *etc.*

In an embodiment, the process (400) may further include presenting a topic table with information from the set of topic objects and the set of settlement objects. The columns may include information for topics (topic objects), outcomes (settlement objects), status, *etc.* The status may be related to completion of an object and may be labeled as "Not Started", "On Track", "Deprioritized", *etc.*

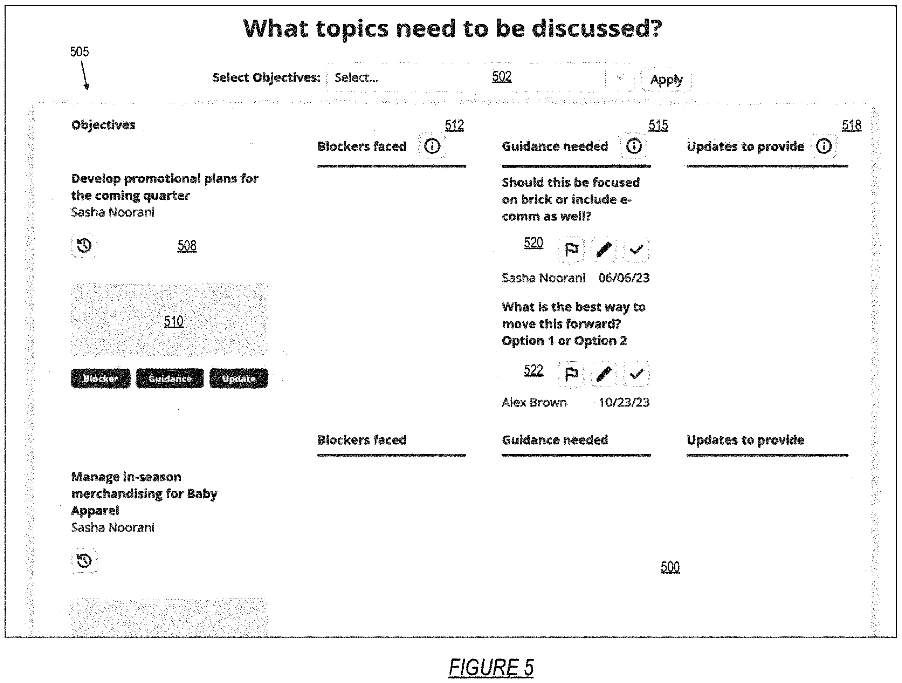

Turning to Figure 5, the user interface (500) may be displayed on a user device that is in communication with a server. The user interface (500) includes several interface elements that may display and receive information. The information received from the interface elements may, for the user inputs, be sent to the server to update the objects maintained by the system.

The interface element (502) includes a search bar. Terms entered by the user into the search bar of the interface element (502) may be used to filter the objective objects displayed in the interface element (505). In an embodiment, selecting the down arrow on the interface element (502) may display a list of objectives that are associated with the user, associated to a subordinate of the user, associated with a manager of the user, *etc.*

The interface element (505) displays a list of objective cards and topic cards. The list includes multiple rows with each row displaying an objective card and the topic cards associated with the objective card. The user may scroll the list to view the rows of objective cards. The first row displayed shows an objective card of the interface element (508).

The interface element (508) displays an objective card. The objective card of the interface element (508) displays the textual description ("Develop promotional plans for the coming quarter") from an object record of an objective object for an objective. The objective card of the interface element (508) also displays the text of a name ("Sasha Noorani") from a user object associated with the objective object to identify the user associated with the objective. The interface element (508) further includes the interface element (510).

The interface element (510) includes an edit box and a set of buttons. The edit box may receive a text description for a topic object that may be created upon selection of one of the buttons. The buttons are labeled "Blocker", "Guidance", and "Update" to identify the type of topic object created when a button is selected. The topic objects may be displayed in the interface elements (512), (515), and (518).

The interface elements (512), (515), and (518) are part of the same row as the interface element (508) within the list (505). The interface element (512) shows a list of topic cards for blocker objects, the interface element (515) shows a list of topic cards for guidance objects, and the interface element (518) shows a list of topic cards for update objects. Topic cards for blocker objects may be referred to as blocker cards, topic cards for guidance objects may be referred to as guidance cards, and topic cards for update objects may be referred to as update cards. The user may scroll individually within the different interface elements (512), (515), and (518) to view different topic cards within the lists of the interface elements (512), (515), and (518).

The interface element (515) displays two topic cards in a list. The list includes guidance cards displayed within the interface elements (520) and (522). The interface element (520) displays a topic card for a guidance object. The text "Should this be focused on brick or include e-comm as?" is from the object record of the guidance object. The text "Sasha Noorani" is from a user object associated to the guidance object to identify the user responsible for the topic. The text "06/06/23" displays a date for the guidance object, the creation date of the guidance object. The interface element (520) also displays three buttons. An icon for the first button displays a flag to indicate that selection of the first button will change a flag value (*e.g.,* "0" or "1") to identify if the guidance object is "flagged". An icon for the second button displays a pencil to indicate that selection of the second button may be used to edit the guidance object, including the text description for the guidance object. An icon for the third button displays a check mark to indicate that selection of the third button will change a completion value (*e.g.,* "true" or "false") for the guidance object to indicate if the guidance object has been completed.

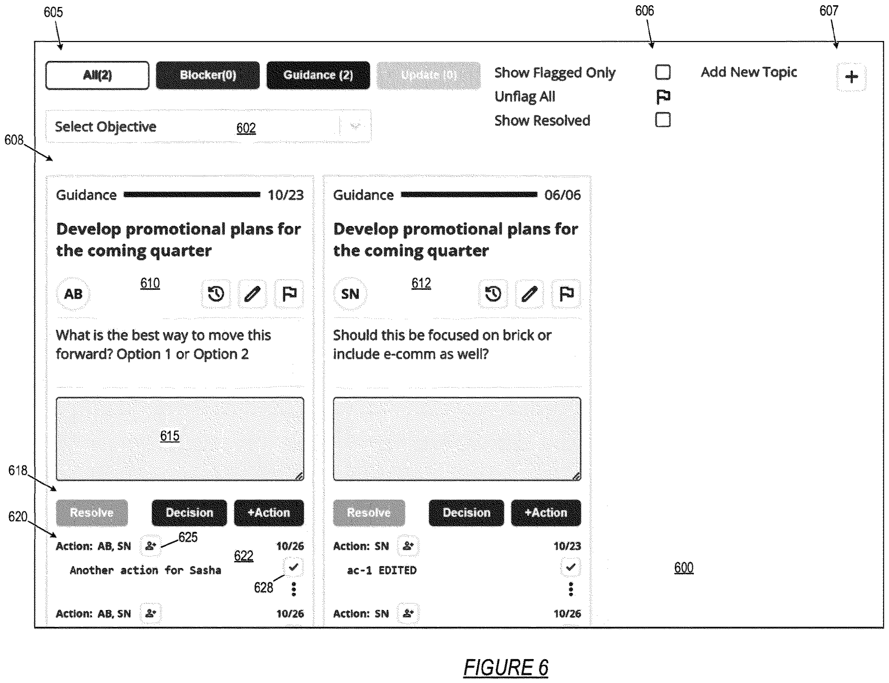

Turning to Figure 6, the user interface (600) may be displayed on a user device that is in communication with a server. The user interface (600) may be used to display and manage topic objects with several interface elements.

The interface element (602) is a selection box. The selection box may receive text to filter objectives and the down arrow may be operated to display a list representing objective objects that may be selected. Upon selecting an objective, the interface element (608) may be filled with interface elements (*e.g.,* the interface elements (610) and (612)) that are filtered down from the list of possible topic cards to display topic cards that correspond to the selected objective. The topic cards displayed in the interface element (608) may be controlled using the interface elements (605).

The interface elements (605) include buttons for selecting the type of topic objects that may be displayed in the interface element (608). For example, selecting the button labeled "Guidance" filters the display of cards within the interface element (608) to display cards for topic objects that are guidance objects.

The interface elements (606) include check boxes that may also filter the cards displayed within the interface element (608). A first check box may be used to update the interface element (608) to display topic cards for topic objects that have had a flag value set (*e.g.,* set to "1"). A second checkbox may be displayed as a flag and used to unflag (*e.g.,* set the flag value to "0") the topic objects for the cards displayed in the interface (608). A third checkbox may be used to update the interface element (608) to display cards for topic objects that have been identified as resolved (*e.g.,* a completion value set to "1").

The interface element (607) may be used to add a new topic object and map the new topic object to a particular objective object. Selection of the button within the interface element (607) may bring up another card to receive the user inputs for generating a new topic object. The interface element (608) displays a list of interface elements, including the interface elements (610) and (612) for topic cards that are related to the objective object selected with the interface element (602). The interface elements (610) and (612) show topic cards for guidance objects. The topic cards may be used to update the guidance objects and to generate settlement objects for the guidance objects. The guidance objects of the interface elements (608) each display the same text "Develop promotional plans for the coming quarter" for the objective object that is upstream and is the parent of the guidance objects displayed in the interface elements (610) and (612). While having the same objective object as a parent, the guidance objects of the interface element (610) and (612) have different dates of creation, are associated with different users, and have different text as part of the object records of the guidance objects.

The interface element (610) is associated with the user with the initials "AB", was created on the date "10/23", includes the text "What is the best way to move this forward? Option 1 or Option 2". The interface element (610) includes the interface element (615). The interface element (615) is an edit box which may be used to receive text from the user. The text received with the edit box may be incorporated to the object record for a settlement object created as a child that is downstream from the guidance object represented by the interface element (610). The type of settlement object may be determined with the interface elements (618). The interface elements (618) are a set of buttons that, when selected, create a settlement object that may use the text from the interface element (615). Upon selecting the first button, labeled "Resolve", the topic object of the interface element (610) will be identified as resolved, *e.g.,* by setting a binary value named resolved to true. Upon selecting the second button, labeled "Decision", a decision object that includes the text from the interface element (615) may be created. Upon selecting the third button, labeled "+Action", an action object that includes the text from the interface element (615) may be created. Below the interface elements (618) is the interface element (620).

The interface element (620) is a list of interface elements for the settlement objects that are downstream or child objects of the topic object of the interface element (610). The interface element (620) may be scrolled to show settlement cards for multiple settlement objects. The interface element (620) includes the interface element (622). The interface element (622) is a settlement card that displays information of a settlement object. The settlement object of the interface element (622) is identified with the text "Action" as an action object. The settlement object of the interface element (622) is associated with two users, one having the initials "AB" and the other having the initials "SN". The settlement object of the interface element (622) was created on the date identified as "10/26" (*e.g.,* on October 26). The object record for the settlement object of the interface element (622) includes the text "Another action for Sasha" that is displayed in the interface element (622). The interface element (622) further includes the interface elements (625) and (628). The interface elements (625) and (628) are buttons that may be used to manipulate the settlement object displayed with the interface element (622). Selecting the interface element (625) may display a menu that may be used by the user to associate another user with the settlement object of the interface element (622). The interface element (628) may be used to toggle the completion value (*e.g.,* set to "0" or "1") of the settlement object of the interface element (622).

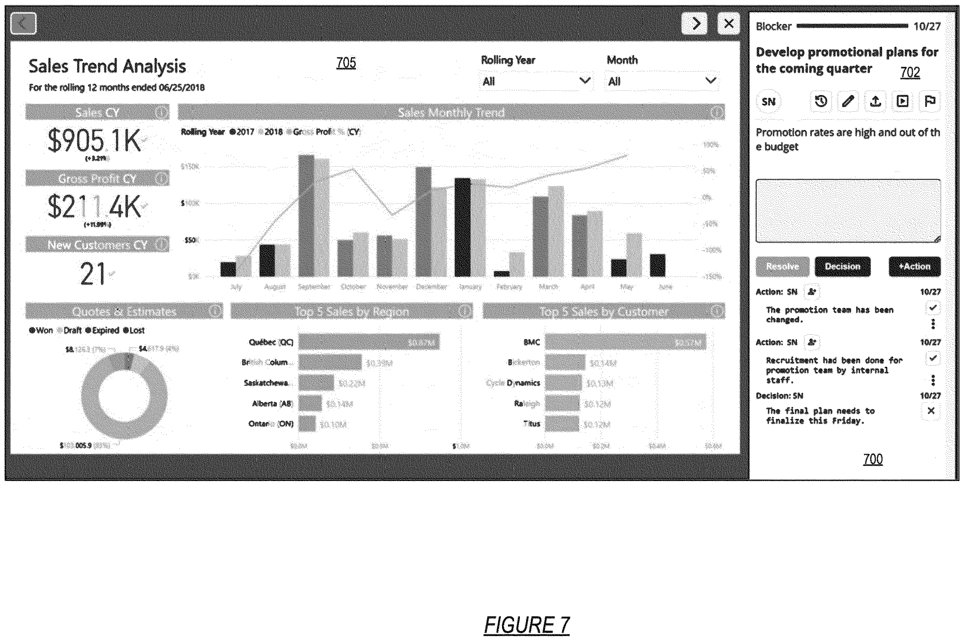

Turning to Figure 7, the user interface (700) may be displayed on a user device. The user interface (700) includes multiple interface elements to display information from the objects maintained by the system.

The interface element (702) displays information from a topic object in a topic card. The topic card includes interface elements for creating additional settlement objects and displaying the cards (*i.e.,* settlement cards) for the settlement objects associated with the topic object of the interface element (702). The interface element (702) is displayed beside the interface element (705).

The interface element (705) displays information related to the topic card of the interface element (702). As an example, the graphs and information displayed in the interface element (705) may provide information to the user that may then be used to create or update settlement objects using the interface element (702).

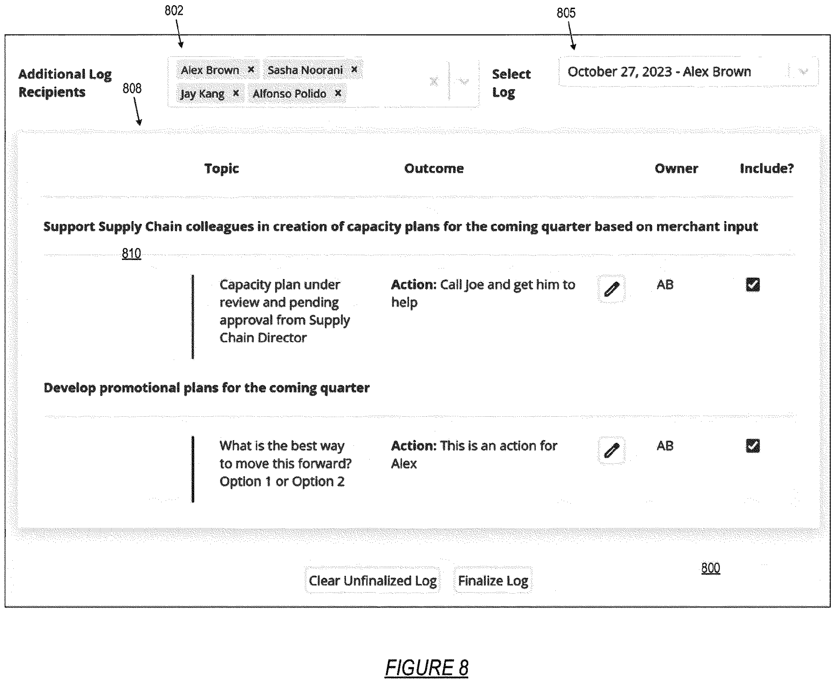

Turning to Figure 8, the user interface (800) may be displayed on a user device. The user interface (800) includes multiple interface elements to display information from the objects maintained by the system as a list of a log of changes to the objects. The log may be a record of updates to objects during a meeting between users of the system.

The interface element (802) is a list element that includes the names of users. The names of the users in the list element of the interface element (802) may receive a copy of the log displayed in the user interface (800).

The interface element (805) is a selection bar. Selection of the selection bar may display a dropdown list of meetings for which logs are available. The selection bar displays the text "October 27, 2023 - Alex Brown" to indicate that the meeting in which the log displayed in the user interface (800) took place on "October 27, 2023" and was hosted by the user named "Alex Brown".

The interface element (808) is a list of the entries for the log displayed in the user interface (800). The list of the interface element (808) includes multiple columns for information from the objects maintained by the system. The interface element (808) may be scrolled by the user to view multiple entries, including the entry for the interface element (810). The interface element (810) is an entry for the log identified with the interface element (805). The text "Support Supply Chain colleagues in creation of capacity plans for the coming quarter based on merchant input" is from an object record of an objective object. The text "Capacity plan under review and pending approval from Supply Chain Director" is from an object record of a topic object. The text "Call Joe and get him to help" is from an object record of a settlement object that is an action object.

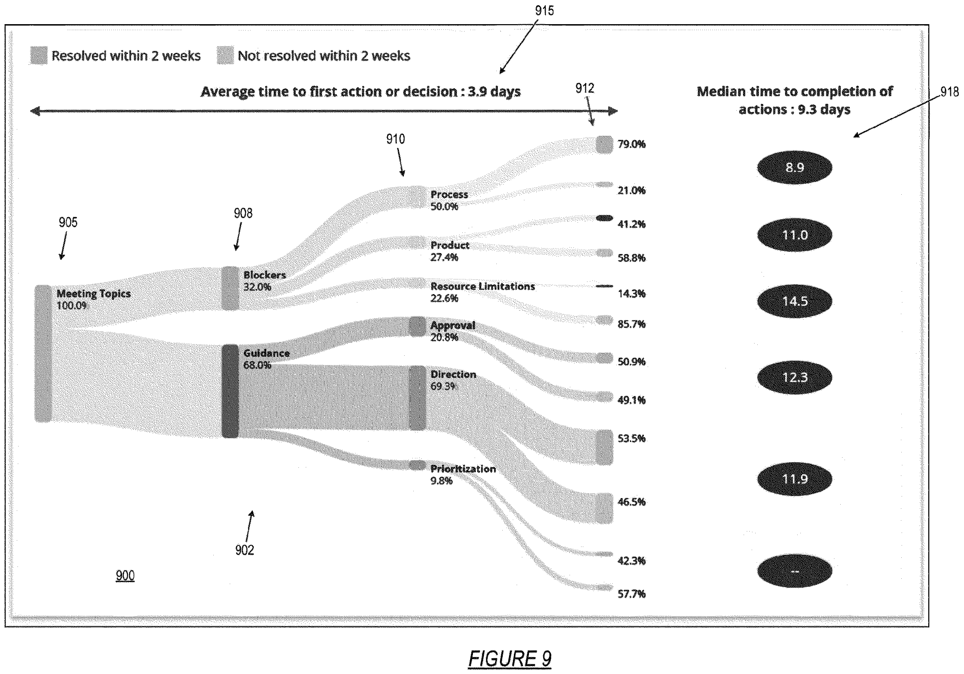

Turning to Figure 9, the user interface (900) may be displayed on a user device. The user interface (900) displays metrics and graphs related to the objects managed by the system. The user interface (900) includes multiple interface elements to display the metrics and information from the objects in the interface element (902) as a topic diagram. The topic diagram is displayed as a Sankey diagram that visually depicts the distribution of different objects with different stages shown in the interface elements (905) through (912).

The interface element (905) depicts a first stage for topic objects. The first stage splits to the second stage (interface element (908)) to depict the magnitude of blocker objects and guidance objects that make up the topic objects. For example, the diagram indicates that "32.0%" of the topic objects (labeled "Meeting Topics" in the interface element (905)) are blocker objects (labeled "Blockers" in the interface element (908)). The diagram further indicates that "68.0%" of the topic objects are guidance objects (labeled "Guidance" in the interface element (908)). The interface element (908) depicts a second stage of the topic objects grouped by the type of the topic objects. Different types may be shown with different colors. For example, orange may be used for blocker objects and blue may be used for guidance objects. The second stage splits to the third stage (interface element (910)) to depict the magnitude of different categories for the topic objects (blocker objects and guidance objects) from the second stage in the interface element (908). For example, the diagram indicates that "50.0%" of the blocker objects are labeled as "Process", "27.4%" of the blocker objects are labeled as "Product", and "22.6%" of the blocker objects are labeled as "Resource Limitations". The diagram further indicates that "20.8%" of the guidance objects are labeled as "Approval", "69.3%" of the guidance objects are labeled as "Direction", and "9.8%" of the guidance objects are labeled as "Prioritization".

The labels identify type for the blocker and guidance objects. The label "Process" indicates that the corresponding blocker objects correspond to process related issues. The label "Product" indicates that the corresponding blocker objects correspond to product related issues. The label "Resource Limitations" indicates that the corresponding blocker objects correspond to resource limitation issues. The label "Approval" indicates that the corresponding guidance objects correspond to approval issues. The label "Direction" indicates that the corresponding guidance objects correspond to direction issues. The label "Prioritization" indicates that the corresponding guidance objects correspond to prioritization issues.

The labels for the topic objects are determined by a machine learning model. For example, a blocker categorization model may predict the labels for blocker objects and a guidance categorization model may predict the labels for guidance objects.

The interface element (910) depicts a third stage. The third stage splits the fourth stage (interface element (912)) to depict the magnitude of the completion rates for the different topic objects grouped by type (blocker objects or guidance objects) and by label (process, product, and resource limitation labels for blocker objects and approval, direction, and prioritization labels for guidance objects). For example, of the topic objects that are blocker objects (*i.e.,* "32.0%" of the topic objects) and are labeled "Process" (*i.e.,* "50.0%" of the blocker objects), "79.0%" were resolved (*i.e.,* completion set to "1") within two weeks of the creation of the corresponding objects. Of the blocker objects that are labeled "Process", "21.0%" were not resolved within two weeks of creation.

The interface element (912) depicts a fourth stage. The fourth stage identifies percentages of the topic objects that were resolved within two weeks and that were not resolved within two weeks. Different colors may be used. For example, resolution within 2 weeks may be shown as green and resolution that was not within two weeks may be shown as red.

The interface element (915) displays metric information. The metric information of the interface element (915) indicates that the average time to the creation of a first action object or decision object (which are settlement objects) for the topic objects corresponding to the diagram of the interface element (902) is "3.9 days". In other words, the "3.9 days" is the average time between the creation of a topic object and the creation of the first action or decision object for that topic object.

The interface only (918) displays additional metric information. The metric information of the interface element (918) includes the median time for the action objects of topic objects to be set to complete. For example, the median time for the action objects of blocker objects labeled as "Process" is indicated as "8.9" days. As another example, the median time for the action objects of guidance objects labeled as "Direction" is indicated as "11.9" days.

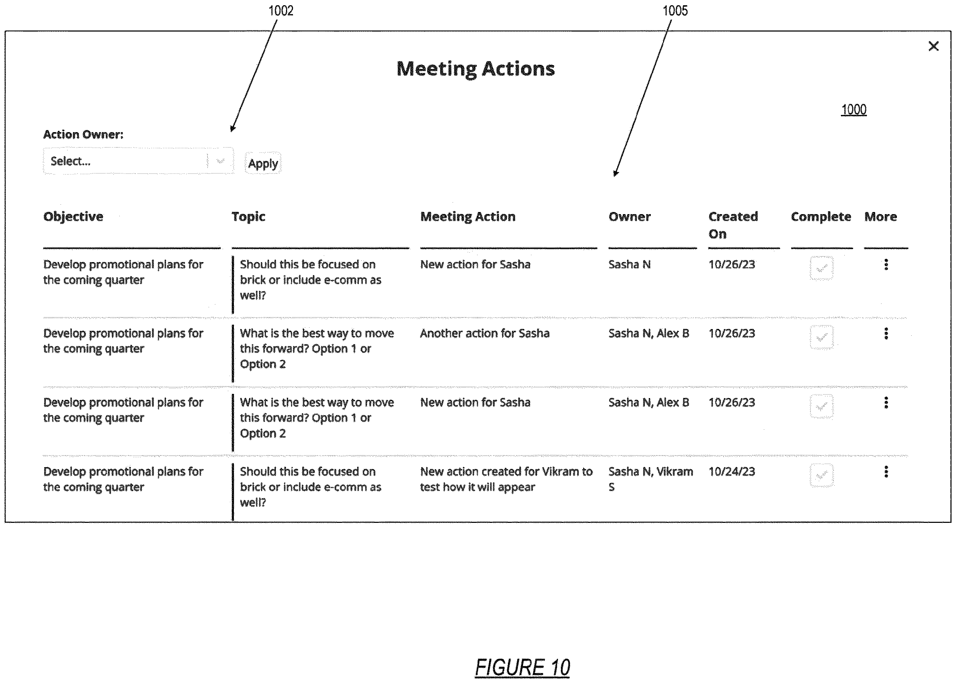

Turning to Figure 10, the user interface (1000) may be displayed on a user device. The user interface (1000) displays a table of information from the objects managed by the system. The user interface (1000) may be displayed after a meeting between users to discuss the objectives, topics, *etc.,* recorded in the objects of the system. The user interface (1000) includes the interface element (1002).

The interface element (1002) is a selection bar that may be used to filter the information displayed in the interface element (1005) by the users associated with action objects. Selecting the interface element (1002) may bring up a dialogue to select the names of one or more users that may be used to filter the information shown in the interface element (1005).

The interface element (1005) is a table that displays information from the objects of the system. The table includes rows and columns with the columns identifying the type of information within the rows. Each row may display text from an objective object, text from a topic object, text from an action object, text identifying the user associated with an action object, text identifying the date the action object was created, and a checkbox indicating whether the action item is complete.

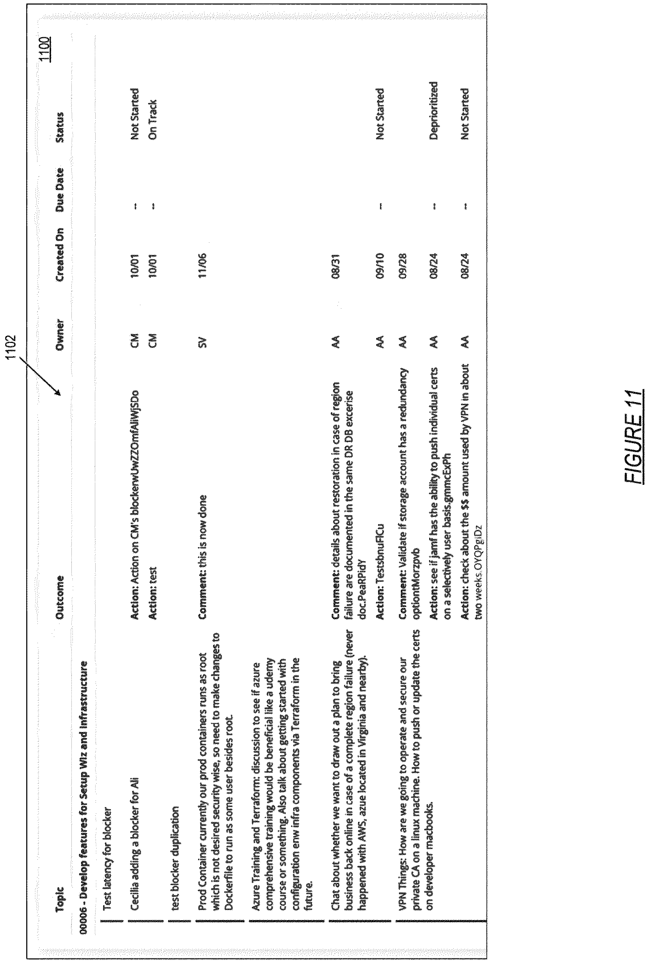

Turning to Figure 11, the user interface (1100) may be displayed on a user device. The user interface (1100) displays a table of information from the objects managed by the system. The user interface (1100) may display topics and actions.

The interface element (1102) is a table that displays information from the objects of the system. The table includes rows and columns with the columns identifying the type of information within the rows. Each row may display text from a topic object, text from multiple settlement objects, text identifying the users associated with the settlement objects, text identifying the dates the settlement objects were created, text identifying a date that the settlement objects are due, and text identifying statuses for the settlement objects.

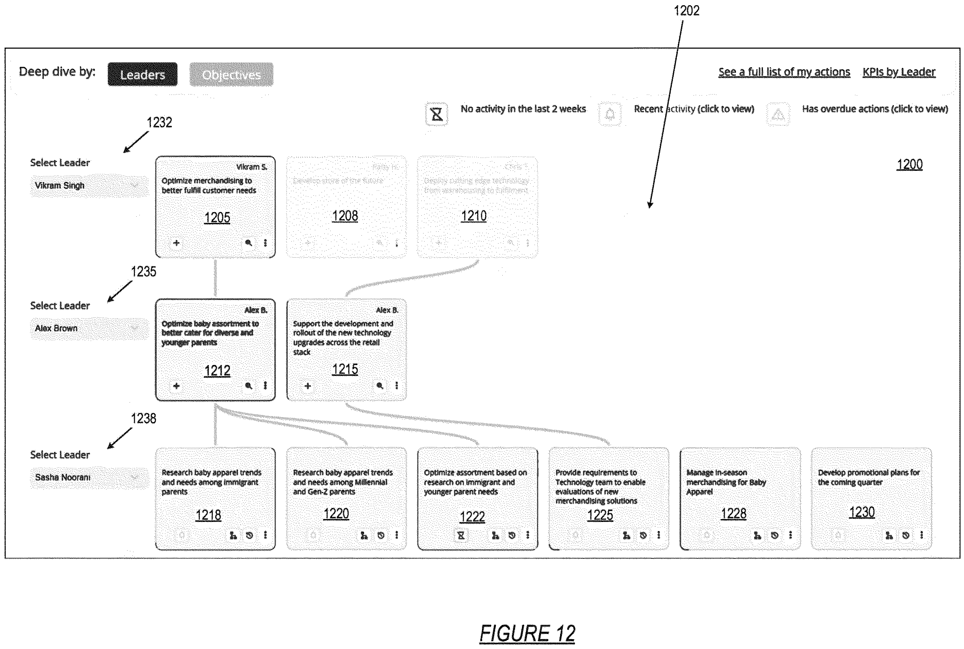

Turning to Figure 12, the user interface (1200) may be displayed on a user device. The user interface (1200) displays a map of objectives (*i.e.,* an objective map) from information from the objects managed by the system.

The interface element (1202) displays an objective map, which shows hierarchical relationships between objective objects and the user objects associated with the objective objects. The objective map of the interface element (1202) displays several objective cards with the interface elements (1205) through (1230).

The interface elements (1205) through (1230) are objective cards that display text from the object records of objective objects. The interface elements (1205) through (1230) show icons that may be selected to show additional information.

For example, the interface element (1218) includes an icon with a bell (*i.e.,* a bell icon) that may be colored green, which upon selection may show a list of activities related to the objective object associated with the interface element (1218). For example, selecting the bell icon may display a page that includes the most recent settlement objects associated with the objective of interface element (1218). The activity includes the creation, modification, and completion of topic objects and settlement objects for the objective object of the interface element (1218).

The interface element (1222) includes an icon with an hourglass (*i.e.,* an hourglass icon) that may be colored red to indicate that there is no activity with the objective object for the interface element (1222). With no activity, there have been no changes to the topic objects and settlement objects for the objective object of the interface element (1222).

Between some of the interface elements (1205) through (1230), lines are drawn to indicate the hierarchy between respective objective objects. For example, the line between the interface element (1205) and the interface element (1212) indicates that the objective object of the interface element (1205) is an upstream parent of the objective object of the interface element (1212), which, correspondingly, is a downstream child of the objective object of the interface element (1205).

In addition to the hierarchy between the objective objects, the objective map of the interface element (1202) shows the hierarchy between user objects. The objective map includes multiple rows displayed in the interface elements (1232), (1235), and (1238) with each row corresponding to a user object. For example, the user object of the row displayed in the interface element (1232) is for a user named "Vikram Singh". The second row displayed in the interface element (1235) is for a user object for a user named "Alex Brown". The third row displayed in the interface element (1238) is for a user object for a username "Sasha Noorani".

The user object of the interface element (1232) may be referenced by upstream identifiers from the objective objects for the interface elements (1205), (1208), and (1210). The upstream identifiers between the objective objects and the user objects indicates that the user of the user object is responsible for the objective of the objective object. For example, the user "Vikram Singh" identified by the interface element (1232) is responsible for the objective objects of the interface elements (1205), (1208), and (1210). The user "Alex Brown" identified by the interface element (1235) is responsible for the objective objects of the interface elements (1212) and (1215). The user "Sasha Noorani" identified by the interface element (1238) is responsible for the objective objects of the interface elements (1218), (1220), (1222), (1225), (1228), and (1230).

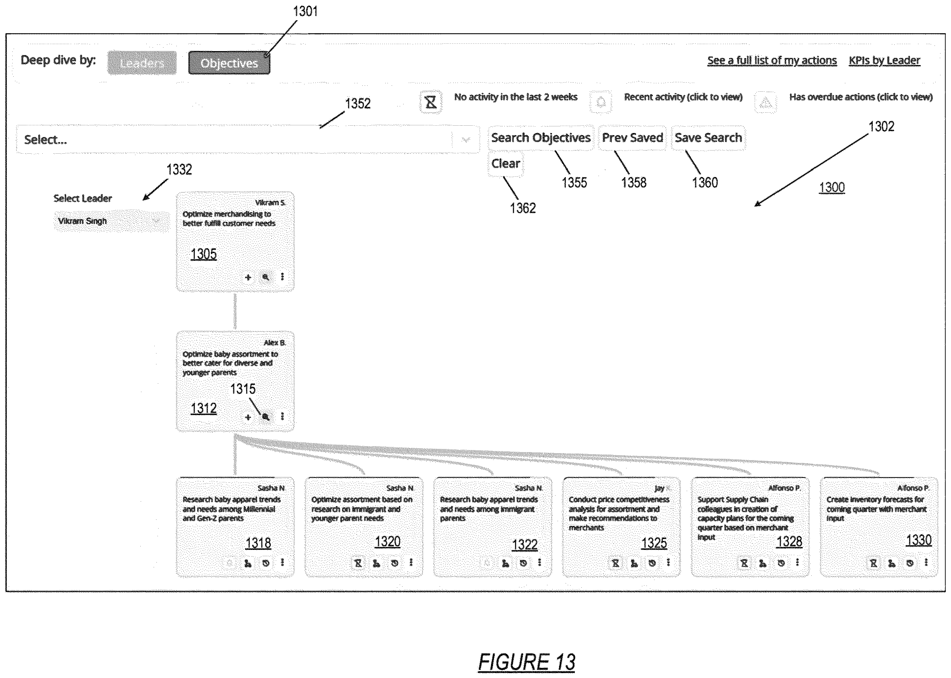

Turning to Figure 13, the user interface (1300) may be displayed on a user device. The user interface (1300) displays a map of objectives (*i.e.,* an objective map) from information from the objects managed by the system. In an embodiment, the user interface (1300) may be displayed responsive to selection of the interface element (1301).

The interface element (1302) displays an objective map, which shows hierarchical relationships between objective objects. The objective map of the interface element (1302) displays several objective cards with the interface elements (1305) through (1330).

The interface elements (1305) through (1330) are objective cards that display text from the object records of objective objects. The interface elements (1305) through (1330) show icons that may be selected to show additional information.

For example, the interface element (1312) includes the interface element (1315) that displays an icon with a magnifying glass. Selecting the interface element (1315) allows the user to drill down from one objective (*i.e.,* the objective of the interface element (1312)) into the child objects of the selected objective. As an example, selecting the interface element (1315) may display the interface elements (1318) through (1330) that correspond to objective objects that our child objects of the objective object represented by the interface element (1312).

The interface element (1352) is a search bar that may be used to search for objectives that may be displayed in the objective map of the interface element (1302) in conjunction with the interface elements (1355) through (1362). A user may type the name of an objective into the interface element (1352) and select the interface element (1355) to search for objectives that include the text inserted into the interface element (1352). Selection of the interface element (1358) may bring up a menu to allow the user to select a previously saved search. Selection of the interface element (1360) the text from the interface element (1352) into a new search that may be retrieved using the interface element (1358). Selection of the interface element (1362) may clear the previously saved searches that were stored with the interface element (1360).

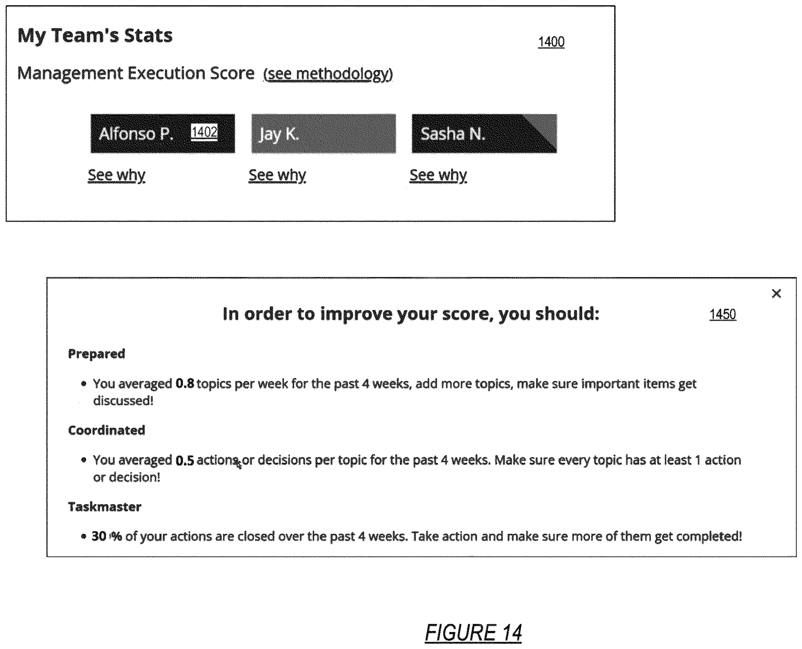

Turning to Figure 14, the user interface (1400) may be displayed on a user device. The user interfaces (1400) and (1450) display information related to execution index data.

The user interface (1400) graphically displays an indication summarizing the execution index data for the user objects of different users of the system with multiple interface elements. The display of the names of the users may be color coded. In an embodiment, the execution index data includes preparation values, coordination values, and taskmaster values calculated by the system from the objects maintained by the system. When each of the values for a user is above a respective threshold, the name of the user may be displayed as green. When one of the values for a user is below the respective threshold of the value, the name of the user may be displayed in red. Selecting the name of a user may bring up information tailored for the user selected. For example, selecting the interface element (1402) for the user named "Alfonso P." may bring up the user interface (1450) with information tailored for the user named "Alfonso P.".

The user interface (1450) displays execution index data for one of the users selected from the user interface (1400). The preparation value is identified as "0.8", which is below the threshold value of "1.0". The coordination value is identified as "0.5", which is below the threshold value of "1.0". The taskmaster value is identified as "30%", which is below the threshold value of "40%". Each of the values that are below the threshold values are provided with a textual description for improving the value.

Embodiments may be implemented on a special purpose computing system specifically designed to achieve the improved technological result. Turning to Figure 15A and Figure 15B, the special purpose computing system (1500) may include one or more computer processors (1502), non-persistent storage (1504), persistent storage (1506), a communication interface (1512) (*e.g.,* Bluetooth interface, infrared interface, network interface, optical interface, *etc.*)*,* and numerous other elements and functionalities that implement the features and elements of the disclosure. The computer processor(s) (1502) may be an integrated circuit for processing instructions. The computer processor(s) (1502) may be one or more cores or micro-cores of a processor. The computer processor(s) (1502) includes one or more processors. The one or more processors may include a central processing unit (CPU), a graphics processing unit (GPU), a tensor processing unit (TPU), combinations thereof, *etc.*

The input devices (1510) may include a touchscreen, keyboard, mouse, microphone, touchpad, electronic pen, or any other type of input device. The input devices (1510) may receive inputs from a user that are responsive to data and messages presented by the output devices (1508). The inputs may include text input, audio input, video input, *etc.,* which may be processed and transmitted by the computing system (1500) in accordance with the disclosure. The communication interface (1512) may include an integrated circuit for connecting the computing system (1500) to a network (not shown) (*e.g.,* a local area network (LAN), a wide area network (WAN) such as the Internet, mobile network, or any other type of network), and/or to another device, such as another computing device.

Further, the output devices (1508) may include a display device, a printer, external storage, or any other output device. One or more of the output devices (1508) may be the same or different from the input device(s) (1510). The input and output device(s) (1510) and (1508) may be locally or remotely connected to the computer processor(s) (1502). Many different types of computing systems (1500) exist, and the aforementioned input (1510) and output device(s) (1508) may take other forms. The output devices (1508) may display data and messages that are transmitted and received by the computing system (1500). The data and messages may include text, audio, video, *etc.,* and include the data and messages described above in the other figures of the disclosure.

Software instructions in the form of computer readable program code to perform embodiments may be provided, in whole or in part, to a programmable computing device (e.g. one or more processors and/or a device including one or more processors) from or by a computer readable medium. A computer readable medium may be provided as a computer-readable storage medium and/or a computer-readable transmission medium. A computer-readable storage medium may store such instructions, temporarily or permanently, on medium (which mnay be described as being a "non-transitory computer readable medium") such as a CD, DVD, storage device, a diskette, a tape, flash memory, physical memory, or any other computer readable storage medium.. A computer-readable transmission medium may include carrier waves, transmission signals or the like. A computer-readable transmission medium may convey instructions between components of a single computer system and/or between plural separate computer systems. Specifically, the software instructions may correspond to computer readable program code that, when executed by a processor(s), is configured to perform one or more embodiments, which may include transmitting, receiving, presenting, and displaying data and messages described in the other figures of the disclosure.

The computing system (1500) in Figure 15A may be connected to or be a part of a network. For example, as shown in Figure 15B, the network (1520) may include multiple nodes (*e.g.,* node X (1522), node Y (1524)). Each node may correspond to a computing system, such as the computing system shown in Figure 15A, or a group of nodes combined may correspond to the computing system (1500) shown in Figure 15A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (1500) may be located at a remote location and connected to the other elements over a network.

The nodes (*e.g.,* node X (1522), node Y (1524)) in the network (1520) may be configured to provide services for a client device (1526), including receiving requests and transmitting responses to the client device (1526). For example, the nodes may be part of a cloud computing system. The client device (1526) may be a computing system, such as the computing system shown in Figure 15A. Further, the client device (1526) may include and/or perform all or a portion of one or more embodiments of the disclosure.

The computing system of Figure 15A may include functionality to present raw and/or processed data, such as results of comparisons and other processing. For example, presenting data may be accomplished through various presenting methods. Specifically, data may be presented by being displayed in a user interface, transmitted to a different computing system, and stored. The user interface may include a GUI that displays information on a display device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

Therefore, from on perspective, there have been described approaches for collection and presentation hierarchical data. The method includes receiving objective user inputs applied to a set of objective objects of a set of objects, receiving topic user inputs applied to a set of topic objects of the set of objects, and receiving settlement user inputs applied to a set of settlement objects of the set of objects. The method further includes applying a guidance categorization model to a guidance object of the set of topic objects to a generate a guidance label for the guidance object, applying a blocker categorization model to a blocker object of the set of topic objects to generate a blocker label for the blocker object, and applying a diagram metrics model to the set of objects to generate diagram metrics data. The method further includes presenting a topic diagram using the guidance label, the blocker label, and the diagram metrics data.

Further examples are set out in the following numbered clauses.

Clause 1. A method comprising: receiving objective user inputs applied to a set of objective objects of a set of objects; receiving topic user inputs applied to a set of topic objects of the set of objects; receiving settlement user inputs applied to a set of settlement objects of the set of objects; applying a guidance categorization model to a guidance object of the set of topic objects to a generate a guidance label for the guidance object; applying a blocker categorization model to a blocker object of the set of topic objects to generate a blocker label for the blocker object; applying a diagram metrics model to the set of objects to generate diagram metrics data; and presenting a topic diagram using the guidance label, the blocker label, and the diagram metrics data.

Clause 2. The method of clause 1, further comprising: extracting a set of text from a set of user inputs comprising one or more of the objective user inputs, the topic user inputs, and the settlement user inputs; and applying an embedding model to the set of text to generate a set of vectors for the set of objects.

Clause 3. The method of clause 1 or 2, further comprising: training the guidance categorization model to generate the guidance label from a vector representing the guidance object by applying the guidance categorization model to a set of training inputs to generate a set of training outputs used to generate model updates that are applied to the guidance categorization model.

Clause 4. The method of clause 1, 2 or 3, further comprising: training the blocker categorization model to generate the blocker label from a vector representing the blocker object by applying the blocker categorization model to a set of training inputs to generate a set of training outputs used to generate model updates that are applied to the blocker categorization model.

Clause 5. The method of any preceding clause, further comprising: applying an execution index model to the set of objects to generate execution index data; and presenting execution index data in response to an execution user input.

Clause 6. The method of any preceding clause, further comprising: applying an objective mapping model to the set of objects to generate an objective map; and presenting an objective map with the set of objective objects in response to a mapping user input.

Clause 7. The method of any preceding clause, further comprising: presenting an objective map with a first objective card representing a first objective object of the set of objective objects and linked to a first user object; presenting the objective map with a second objective card representing a second objective object of the set of objective objects and linked to a second user object; and presenting a connection between the first objective card and the second objective card, wherein the connection represents an objective hierarchy between the first objective object and the second objective object and represents a user hierarchy between the first user object and the second user object.

Clause 8. The method of any preceding clause, further comprising: presenting an objective map with a first objective card comprising an activity icon coded to identify an activity level.

Clause 9. The method of any preceding clause, further comprising: presenting an objective table with information from the set of objective objects and the set of topic objects.

Clause 10. The method of any preceding clause, further comprising: presenting a topic table with information from the set of topic objects and the set of settlement objects.

Clause 11. A system comprising at least one processor; an application that, when executing on the at least one processor, performs: receiving objective user inputs applied to a set of objective objects of a set of objects; receiving topic user inputs applied to a set of topic objects of the set of objects; receiving settlement user inputs applied to a set of settlement objects of the set of objects; applying a guidance categorization model to a guidance object of the set of topic objects to a generate a guidance label for the guidance object; applying a blocker categorization model to a blocker object of the set of topic objects to generate a blocker label for the blocker object; applying a diagram metrics model to the set of objects to generate diagram metrics data; and presenting a topic diagram using the guidance label, the blocker label, and the diagram metrics data.

Clause 12. The system of clause 11, wherein the application further performs: extracting a set of text from a set of user inputs comprising one or more of the objective user inputs, the topic user inputs, and the settlement user inputs; and applying an embedding model to the set of text to generate a set of vectors for the set of objects.

Clause 13. The system of clause 11 or 12, wherein the application further performs: training the guidance categorization model to generate the guidance label from a vector representing the guidance object by applying the guidance categorization model to a set of training inputs to generate a set of training outputs used to generate model updates that are applied to the guidance categorization model.

Clause 14. The system of clause 11, 12 or 13, wherein the application further performs: training the blocker categorization model to generate the blocker label from a vector representing the blocker object by applying the blocker categorization model to a set of training inputs to generate a set of training outputs used to generate model updates that are applied to the blocker categorization model.

Clause 15. The system of any of clauses 11 to 14, wherein the application further performs: applying an execution index model to the set of objects to generate execution index data; and presenting execution index data in response to an execution user input.

Clause 16. The system of any of clauses 11 to 15, wherein the application further performs: applying an objective mapping model to the set of objects to generate an objective map; and presenting an objective map with the set of objective objects in response to a mapping user input.

Clause 17. The system of any of clauses 11 to 16, wherein the application further performs: presenting an objective map with a first objective card representing a first objective object of the set of objective objects and linked to a first user object; presenting the objective map with a second objective card representing a second objective object of the set of objective objects and linked to a second user object; and presenting a connection between the first objective card and the second objective card, wherein the connection represents an objective hierarchy between the first objective object and the second objective object and represents a user hierarchy between the first user object and the second user object.

Clause 18. The system of any of clauses 11 to 17, wherein the application further performs: presenting an objective map with a first objective card comprising an activity icon coded to identify an activity level.

Clause 19. The system of any of clauses 11 to 18, wherein the application further performs: presenting an objective table with information from the set of objective objects and the set of topic objects.

Clause 20. A computer readable medium comprising instructions executable by at least one processor to perform: receiving objective user inputs applied to a set of objective objects of a set of objects; receiving topic user inputs applied to a set of topic objects of the set of objects; receiving settlement user inputs applied to a set of settlement objects of the set of objects; applying a guidance categorization model to a guidance object of the set of topic objects to a generate a guidance label for the guidance object; applying a blocker categorization model to a blocker object of the set of topic objects to generate a blocker label for the blocker object; applying a diagram metrics model to the set of objects to generate diagram metrics data; and presenting a topic diagram using the guidance label, the blocker label, and the diagram metrics data.

As used herein, the term "connected to" contemplates multiple meanings. A connection may be direct or indirect (*e.g.,* through another component or network). A connection may be wired or wireless. A connection may be a temporary, permanent, or semi-permanent communication channel between two entities.

The various descriptions of the figures may be combined and may include or be included within the features described in the other figures of the application. The various elements, systems, components, and steps shown in the figures may be omitted, repeated, combined, and/or altered as shown from the figures. Accordingly, the scope of the present disclosure should not be considered limited to the specific arrangements shown in the figures.

In the application, ordinal numbers (*e.g.,* first, second, third, *etc.*) may be used as an adjective for an element (*i.e.,* any noun in the application). The use of ordinal numbers is not to imply or create any particular ordering of the elements nor to limit any element to being a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, unless expressly stated otherwise, or is an "inclusive or" and, as such includes "and." Further, items joined by an "or" may include any combination of the items with any number of each item unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above may be devised which do not depart from the scope of the claims as disclosed herein. Accordingly, the scope should be limited only by the attached claims.

## Claims

1. A method comprising:
receiving objective user inputs applied to a set of objective objects of a set of objects;
receiving topic user inputs applied to a set of topic objects of the set of objects;
receiving settlement user inputs applied to a set of settlement objects of the set of objects;
applying a guidance categorization model to a guidance object of the set of topic objects to a generate a guidance label for the guidance object;
applying a blocker categorization model to a blocker object of the set of topic objects to generate a blocker label for the blocker object;
applying a diagram metrics model to the set of objects to generate diagram metrics data; and
presenting a topic diagram using the guidance label, the blocker label, and the diagram metrics data.

2. The method of claim 1, further comprising:
extracting a set of text from a set of user inputs comprising one or more of the objective user inputs, the topic user inputs, and the settlement user inputs; and
applying an embedding model to the set of text to generate a set of vectors for the set of objects.

3. The method of claim 1 or 2, further comprising:
training the guidance categorization model to generate the guidance label from a vector representing the guidance object by applying the guidance categorization model to a set of training inputs to generate a set of training outputs used to generate model updates that are applied to the guidance categorization model.

4. The method of claim 1, 2 or 3, further comprising: training the blocker categorization model to generate the blocker label from a vector representing the blocker object by applying the blocker categorization model to a set of training inputs to generate a set of training outputs used to generate model updates that are applied to the blocker categorization model.

5. The method of any preceding claim, further comprising:
applying an execution index model to the set of objects to generate execution index data; and
presenting execution index data in response to an execution user input.

6. The method of any preceding claim, further comprising:
applying an objective mapping model to the set of objects to generate an objective map; and
presenting an objective map with the set of objective objects in response to a mapping user input.

7. The method of any preceding claim, further comprising:
presenting an objective map with a first objective card representing a first objective object of the set of objective objects and linked to a first user object;
presenting the objective map with a second objective card representing a second objective object of the set of objective objects and linked to a second user object; and
presenting a connection between the first objective card and the second objective card, wherein the connection represents an objective hierarchy between the first objective object and the second objective object and represents a user hierarchy between the first user object and the second user object.

8. The method of any preceding claim, further comprising:
presenting an objective map with a first objective card comprising an activity icon coded to identify an activity level.

9. The method of any preceding claim, further comprising:
presenting an objective table with information from the set of objective objects and the set of topic objects.

10. The method of any preceding claim, further comprising:
presenting a topic table with information from the set of topic objects and the set of settlement objects.

11. A system comprising
at least one processor;
an application that, when executing on the at least one processor, performs:
receiving objective user inputs applied to a set of objective objects of a set of objects;
receiving topic user inputs applied to a set of topic objects of the set of objects;
receiving settlement user inputs applied to a set of settlement objects of the set of objects;
applying a guidance categorization model to a guidance object of the set of topic objects to a generate a guidance label for the guidance object;
applying a blocker categorization model to a blocker object of the set of topic objects to generate a blocker label for the blocker object;
applying a diagram metrics model to the set of objects to generate diagram metrics data; and
presenting a topic diagram using the guidance label, the blocker label, and the diagram metrics data.

12. The system of claim 11, wherein the application further performs:
extracting a set of text from a set of user inputs comprising one or more of the objective user inputs, the topic user inputs, and the settlement user inputs; and
applying an embedding model to the set of text to generate a set of vectors for the set of objects.

13. The system of claim 11 or 12, wherein the application further performs:
training the guidance categorization model to generate the guidance label from a vector representing the guidance object by applying the guidance categorization model to a set of training inputs to generate a set of training outputs used to generate model updates that are applied to the guidance categorization model.

14. The system of claim 11, 12 or 13, wherein the application further performs functionality corresponding to the method of any of claims 5 to 10.

15. A computer readable medium comprising instructions, that when executed by at least one programmable computing device, cause the programmable computing device to become configured to perform the method of any of claims 1 to 10.
